# EUROPÄISCHE PATENTSCHRIFT

(11) **EP 1 894 842 B1**
(45) Veröffentlichungstag und Bekanntmachung des Hinweises auf die Patenterteilung: **15.09.2010**
(21) Anmeldenummer: 07405255.6
(22) Anmeldetag: 29.08.2007
(51) Int. Cl.: B64G 1/40

(54) **Zur Raumfahrt geeigneter Impuls-Schubantrieb mit motorischer Schuberzeugung ohne Ausstoss von Masse**
Impulse propulsion system suitable for space travel with powered thrust generation without mass discharge
Entraînement de poussée d'impulsion approprié à la navigation spatiale doté d'une génération de poussée motorisée sans rejet de masse

(30) Priorität: 02.09.2006 CH 14042006
(43) Veröffentlichungstag der Anmeldung: 05.03.2008
(73) Patentinhaber: Häfeli, Hans, 8053 Zürich (CH)
(72) Erfinder: Häfeli, Hans, 8053 Zürich (CH)
(74) Vertreter: Felber, Josef

(56) Entgegenhaltungen:
- WO-A-88/10357
- US-A- 5 313 851

## Beschreibung

### Technisches Gebiet

Die Erfindung betrifft einen Impuls-Schubantrieb, ohne Ausstoss von Masse mit mechanischer Schuberzeugung mittels konventioneller Motoren, luft- und raumfahrttauglich, benutzbar auch unter Wasser, über Wasser, in der Atmosphäre und überall dort, wo sich ein Objekt durch Schubantrieb vorwärts bewegen lässt und Wärme abgestrahlt, beziehungsweise Wärme abgeleitet werden kann.

### Stand der Technik

Allgemein bekannt sind die Raketentechnik mit chemischen Antrieben und die Ionenantriebe, denen zu eigen ist, dass zwecks Schuberzeugung, Masse in Form von Verbrennungsgasen oder ionisierter Gase ausgestossen werden. Und bis diese Gase ausgestossen sind, müssen diese solange mit beschleunigt werden, bis der Brennstoff des chemischen Antriebes oder die ionisierbaren Gase aufgebraucht sind und damit ist auch jede Beschleunigung auch für den Ionenantrieb, trotz Vorhandensein von Solarenergie beendet.

Die US-A-5 313 851 offenbart einen mechanischen Rückstossantrieb, der motorisch Rotationsenergie ohne Ausstoss von Masse erzeugt und in einzelne Rückstossimpluse pro Zyklus umwandelt, und zwar nach dem Billardprinzip, mit drei Massen mit gleichem Gewicht. Die dem zu beschleunigenden "Vehicule", dem zu beschleunigende Objekt, werden durch einen elastischen Stoss und Zentrifugalkraft Impulse verschafft, die das Objekt beschleunigen. Der Zyklus ist wiederholbar.

### Detaillierte Darstellung der Erfindung

Aufgabe der Erfindung ist es daher, einen mechanisch betriebenen Impluls-Schubantrieb zu schaffen, der keine Masse ausstösst und deshalb auch keine Masse für den Ausstoss mitführen oder von ausserhalb für den Ausstoss aufnehmen muss. Der Betrieb des Impuls-Schubantriebes soll mit beliebigen Motoren, wie Verbrennungsmotoren, mit Elektromotoren oder mit linearen Antrieben, die eine interne Masse beschleunigen können, erfolgen. Der Betrieb des Impuls-Schubantriebes mit Solarenergie soll eine lange Lebensdauer aufweisen, wie die der verwendeten Solarzellen, der Batterien und der Wälzlager. Im Weltraum soll die Schubkraft *F* in Newton grösser sein als die der Ionen-Rückstossantriebe. In der Atmosphäre soll der Impuls-Schubantrieb Lasten tragen, beziehungsweise beschleunigen können, solange die Verbrennungsmotoren betrieben werden können.

Diese Aufgabe wird erfindungsgemäss durch das Entgegenwirken von elastischen und anelastischen Stössen gelöst. Dabei wird im Impuls-Schubantrieb selbst mindestens eine frei bewegliche Masse auf mindestens einer beliebigen, geraden, krummlinigen oder in sich, geschlossenen Bahn motorisch mit motorischem Drehmoment bewirktem elastischen Stoss beschleunigt, vorzugsweise mit einem elastischen Teil, das als elastischer Kraftspeicher mit der Federkraft F wirkt. Dadurch erhält die bewegliche Masse die maximale Geschwindigkeit und der gesamte Impuls-Schubantrieb, als Rückstoss, der entgegen der Drehrichtung des elastischen Teiles, dem elastischen Kraftspeicher, über den Motor auf den Impuls-Schubantrieb wirkt, somit diesem einen doppelt so grossen Impuls gibt, als der des anelatischen Stosses, und dadurch dem Impuls-Schubantrieb eine doppelt so grosse Beschleunigung und einen doppelt so grossen Geschwindigkeitszuwachs verschafft als beim anelastischen Stoss. Und nachfolgend läuft die frei bewegliche Masse mit der maximalen Geschwindigkeit und ohne motorischen Antrieb in ein anelastisches Teil ein, was wie eine mechanische, eine reibende Bremse oder eine verschleissfreie Wirbelstrombremse wirkt, und erteilt diesen einen anelastischen Stoss. Mit dem anelastischen Stoss wird Masse abgebremst bzw. verzögert, wobei mechanische Bewegungsenergie zum Teil in Warme und/oder in eine andere Energieform umgewandelt wird und der andere Tell einen Schubimpulse für die gesamte Masse des Impuls-Schubantriebes bewirkt und zwar in der Drehrichtung des elastischen Kraftspeichers. Somit erhält der ImpulsSchubantrieb durch den anelastischen Stoss in die Bremse, die mit dem Impuls-Schubantrieb fest verbunden ist, eine halb so grosse Beschleunigung und somit eine halb so grosse Geschwindigkeit wie beim elastischen Stoss wie oben ausgeführt, und zwar entgegengesetzt.

Bei jeder Wiederholung des obigen Vorganges entsteht somit ein Schubimpuls, der den Impuls-Schubantrieb in eine Richtung bewegt und zwar deshalb, weil der elastische Stoss jedesmal doppelt soviel der Impulserzeugungen überträgt wie der anelastische Stoss. Trotzdem sich dieser Vorgang in einem geschlossenen System abspielt, gilt der Schwerpunkterhaltungssatz bei dieser Erfindung nicht, weil die verschieden grossen, entgegen gesetzt wirkenden Stösse, wie oben ausgeführt, ungleich gross sind und somit eine Differenz bilden: "Elastischer Stoss mit doppelter Impulsübertragung minus anelastischer Stoss mit einfacher Impulsübertragung ergibt einen einfachen Impuls mit der Wirkung eines einfachen Impulses". Einfach ausgedrückt entspricht diese Wirkung des Impuls-Schubantriebes dem Ergebnis: "Zwei Schritte vor - ein Schritt zurück - zwei Schritte vor - ein Schritt zurück - usw.". Das bedeutet gleichzeitig, dass der gesamte Impuls-Schubantrieb mit jeder Wiederholung des Vorganges "elastischer Stoss minus unelastischer Stoss" die gleiche Beschleunigung und somit den gleichen Geschwindigkeitszuwachs erfährt, wobei sich die Geschwindigkeitszuwächse addieren. Die Anzahl der wiederholbaren Vorgange pro Sekunde ist etwas geringer als die Anzahl der Umdrehungen des elastischen Kraftspeichers pro Sekunde. Die Strecke der Schritte ist umso kleiner, je grösser die Anzahl der wiederholten Vorgänge pro Sekunde ist. Tatsächlich sind die Schritte wesentlich kleiner, weil ja die Masse der Nutzlast mitbeschleunigt werden muss.

Elastische Stösse ergeben sich zum Beispiel, wenn eine gehärtete Stahlkugel aus einer bestimmten Fallhöhe auf eine ebenfalls gehärtete Stahlfläche fallen gelassen wird. Dann springt die Kugel praktisch jedes Mal wieder auf dieselbe Fallhöhe. Bei diesem Vorgang bewirkt die Kugel einen Impuls in Richtung Stahlplatte, wobei diese mit einer Delle einfedert und dabei einen Impuls *in actio* in die Stahlplatte überträgt und einen Impuls *in reactio* in die Kugel, deren Fallgeschwindigkeit gestoppt wird, um sofort in den Ursprungszustand der Stahlplatte zurückzufedern, wobei die Kugel praktisch wieder auf die ursprüngliche Fallhöhe gebracht wird. Gleichzeitig erfährt die Stahlplatte *in reactio* einen Rückstoss und damit einen zweiten Impuls in Richtung der Stahlplatte und die Kugel *in actio* einen Impuls. Wenn also zwei Körper mit einem elastischen Stoss aufeinander treffen, wird der doppelte Impuls übertragen. Da der Federweg dieser elastischen Körper sehr gering ist, treten bei der Beschleunigung hohe Kraftspitzen auf. Um längere Federwege zu erhalten und um hohe Kraftspitzen zu vermeiden, werden bei dieser Erfindung als zusätzliche Lösung hochelastische Stofffedern oder Formfedern, die einen langen Federweg aufweisen, also elastische Kraftspeicher, angewandt, wie Verdrehfedem, Biegefedem, auf Zug und Druck beanspruchte Schraubenfedern oder pneumatische Kraftspeicher.

Absolut elastische Körper gibt es in der Praxis kaum, denn durch das Verformen der Stahlplatte wird laufend mechanische Bewegungsenergie in Wärme umgewandelt und nach längerer Wiederholung des Vorganges bleibt eine Delle, eine Verformung in der Stahlplatte zurück, was bedeutet, dass ein Teil der mechanischen Bewegungsenergie in eine andere Energieform umgewandelt wurde. Auch ohne Luftwiderstand werden die Impulse immer kleiner und die Fallhöhe immer geringer. Vorzugsweise werden in der Erfindung deshalb elastische Kraftspeicher verwendet, da diese einen viel längeren Federweg haben als die Stahlplatte eines nur elastischen Teils, eines Körpers. Es gibt somit keine Schläge und Deformationen, zudem fallen die Beschleunigungen geringer aus und somit auch die Kraftspitzen, die dem motorischen Drehmoment abverlangt werden. Harte Stösse erfolgen mit elastischen Kraftspeichern praktisch nicht, da beim Beginn der elastischen Stösse die Kraft fast Null ist.

Anelastische Stösse ergeben sich, wenn die Kugel mit ihrer Geschwindigkeit auf eine anelastische Bleiplatte aufläuft oder in ein bremsendes, verzögerndes Bauteil einläuft, wobei die Masse des bremsenden Teils *beschleunigt* und die Kugel und die Bleiplatte oder das bremsende Bauteil mit einer gemeinsamen, neuen Geschwindigkeit weiterlaufen, falls dieses bremsende Bauteil frei beweglich ist.

Wenn man die obige Stahlplatte, die mit einem elastischen *Kraftspeicher* versehen ist, horizontal mit einer motorisch bewirkten Winkelgeschwindigkeit auf eine ruhende und frei bewegliche Kugel auftreffen lässt, spielt sich in Bezug auf die Impulse das gleiche ab wie oben beschrieben, mit Kugel und Stahlplatte. Dabei erhält die frei bewegliche Kugel die Geschwindigkeit, die dem Radius bei einem bestimmten Drehmoment und der Drehzahl des motorischen Antriebes entspricht. Nachdem sich der elastische Kraftspeicher, der mit der Stahlplatte verbunden ist, entspannt hat, bleibt der elastische Kraftspeicher in Kontakt mit der Kugel, da dieser ja die gleiche Geschwindigkeit wie die Kugel hat und somit keinen zusätzlichen Schub bewirkt. Die Kugel verlässt das System nicht, da sonst ein Rückstossantrieb mit Ausstoss von Masse vorläge. Erst durch das Zusammenwirken mit dem anelastischen Stoss ergibt sich ein Impuls, der ohne Ausstoss von Masse nach aussen wirkt. Und ohne motorischen Antrieb, konventionell oder elektrisch, wird die Kugel mit anelastischem Stoss verzögert, durch ein bremsendes Bauteil oder eine Bleiplatte oder einen anderen inelastisch deformierbaren Stoff, wobei mechanische Bewegungsenergie zum Teil in eine andere Energieform wie Wärme und/oder Verformungs-Energie umgewandelt wird.

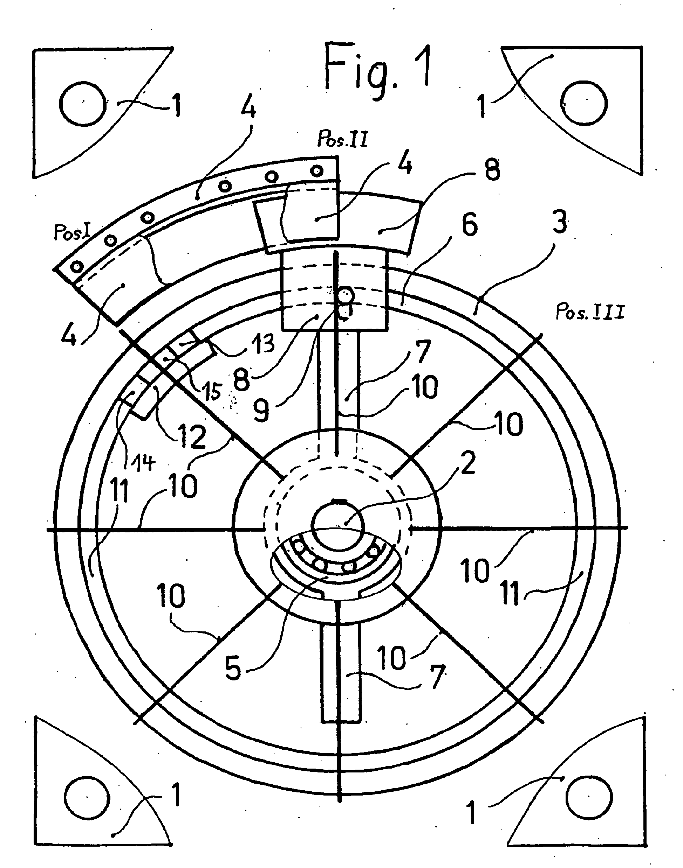

Angaben zur Zeichnung, Fig. 1: Schematische Zeichnung eines Ausführungsbeispiels der Erfindung, teilweise aufgeschnitten.

### Ausführung der Erfindung

### Beispiel 1:

Hinter einer Grundplatte 1, wobei deren Ecken mit vier Bohrungen nur angedeutet sind, befindet sich ein Motor, der eine Achse 2 antreibt, die in dieser Grundplatte 1 gelagert ist, und auf der sich eine Drehmasse 3 befindet. Diese Achse 2 mit der Drehmasse 3 ist in der Grundplatte 1 gelagert. Das Gegenlager befindet sich auf der nicht gezeichneten Gegenplatte zur Grundplatte 1. Die zusätzliche Drehmasse 3 ermöglicht, dass man kurzzeitig grössere Drehmomentspitzen als das motorische Nenn-Drehmoment bei einer bestimmten Drehzahl zuliesse auf der Strecke von Punkt II bis Punkt III abverlangen kann. Auf der Grundplatte 1 befindet sich eine Steuerkurvenbahn 11 auf der ein Gleitnocken des Mitnehmers 9 gleitet oder ein Wälzlager sich abrollt. Auf der Grundplatte 1 befindet ausserdem die mit ihr festverbundene reibende Bremse 4 als bremsendes, *verzögerndes* Bauteil. Auf der Achse 2 vor der Grundplatte 1, ist der Träger 7 mit dem Lager 5, frei drehbar gelagert. Die Schenkel des Trägers 7 sind ausgewuchtet. Ein Schenkel trägt die Masse m 8 inklusiv dem Mitnehmer 9 und dem Segment für die Bremsung für die *Verzögerung* der Masse. Beim Starten des Impuls-Schubantriebes muss der Masse m 8 zuvor eine Geschwindigkeit v erteilt werden. Die Vertiefung 15 in der Steuerkurve 11 ist daher vorerst mit der Hilfsbahn 12, die radial an die Steuerkurve angefahren ist, überbrückt. Somit ist der Mitnehmer 9, der in der Masse m 8 gleitend oder kugelgeführt ist, zum Betrachter hin ausgefahren. Gleichzeitig ist die Bremse ausser Wirkung gesetzt. Dies entspricht dem Betriebszustand: *"Nicht eingeschaltet"* und der Mitnehmer 9 bleibt auch während dem Anfassen des Motors ausgefahren. Beides wird durch eine konventionelle Steuerung mit Fotozellen, Aktuator etc. im Bereich des Auslaufs der Bremse im Punkt II veranlasst. Der Mitnehmer 9 liegt somit zwischen zwei elastischen Kraftspeichern, vorliegend zwischen Blattfedem, die mit ihrem Trägerkörper fest mit der Achse 2 verbunden sind. Beim Anlassen des Motors läuft der elastische Kraftspeicher 10, der eine grosse Kraft bei langem Federweg s aufweist, auf den Mitnehmer 9 der Masse m 8 auf und erteilt der Masse *m* 8 nach einigen Umdrehungen des Motors eine Geschwindigkeit *v*, die der Tangentialgeschwindigkeit beim Auftreffpunkt des Mitnehmers 9 entspricht Zum Starten der Schuberzeugung wird im Bereich II des Auslaufes der Bremse 4 die Hilfskurve 12 mit einem konventionell gesteuerten Aktuator radial weggefahren und bleibt weggefahren, bis die Schuberzeugung beendet werden soll. Die Masse *m* 8 läuft mit der Geschwindigkeit *v* und anliegendem elastischen Kraftspeicher 10 weiter bis zum Einlauf 14 der Kurve 11. Dann geschieht beim Einlauf auf den Grund der Kurve 11 praktisch Verschiedenes gleichzeitig: Der Nocken des Mitnehmers 9 fährt in die Masse m 8 ein, der elastische Kraftspeicher 10 wird freigegeben und läuft am Mitnehmer 9 vorbei, weil gleichzeitig die Masse *m* 8 mit der Geschwindigkeit *v* in die Bremse 4 einläuft, wobei die Geschwindigkeit *v* der Masse *m* 8 verzögert bzw. verringert wird und der freigegebene elastische Kraftspeicher 10 aber die unverminderte Geschwindigkeit *v* hat. Sobald der Mitnehmer 9 über die Auslaufkurve 13 das Niveau der Kurve 11 erreicht hat, ist der Mitnehmer 9 wieder ausgefahren. Durch die Verzögerung der Geschwindigkeit *v* in der Bremse 4 erhält diese und somit der gesamte Impuls-Schubantrieb einen anelastischen Stoss, einen Impuls *mv* in Richtung der Drehrichtung der elastischen Kraftspeicher. Wenn die Masse *m* 8 die Position II erreicht hat, läuft der folgende elastische Kraftspeicher 10 auf den ausgefahrenen Mitnehmer 9 der von der Bremse freigegebenen Masse *m* 8 auf, die nun beschleunigbar ist. Dabei erfährt die Masse *m* 8 einen elastischen Stoss vom Punkt II bis zum Punkt III, somit einen Impuls *2mv,* durch den elastischen Kraftspeicher 10 und zwar in Gegenrichtung der Drehrichtung der elastischen Kraftspeicher 10, weil die Blattfeder ein und ausfedert. Dabei wird die Masse *m* 8 auf die ursprüngliche Geschwindigkeit *v* beschleunigt. Aus der Differenz des *elastischen Stosses 2mv* zum anelastischen Stoss *mv* ergibt sich somit ein Impuls *mv,* der entgegen der Drehrichtung der elastischen Kraftspeicher 10 und somit auf die Masse des ganzen Impuls-Schubantrieb wirkt und diese beschleunigt und dieser einen Geschwindigkeitszuwachs erteilt. Durch das Weiterlaufen des elastischen Kraftspeichers 10 und der Masse *m* 8 mit der Geschwindigkeit *v* und dem anliegenden elastischen Kraftspeicher 10 wird der Einlauf 14 der Kurve 11 erreicht und der gleiche Vorgang, anelastischer Stoss - elastischer Stoss ist wiederholbar, wobei sich bei jeder Wiederholung des Vorganges der Geschwindigkeitszuwachs zur bisherigen Geschwindigkeit des gesamten Impuls-Schubantriebes hinzuaddiert. Es ist einleuchtend, dass die Beschleunigung der Masse des gesamten Impuls-Schubantriebes durch den Impuls *mv* und die zu addierende Geschwindigkeitszunahme geringer ist als die Geschwindigkeit der Masse *m* 8 mit der Geschwindigkeit *v*, da *mv* das Produkt und *v* ein Faktor davon ist, und zwar im Verhältnis der Masse m 8 zur gesamten Masse des Impuls-Schubantriebes. Je näher der Bereich von Position I bis Position III einer Geraden kommt, umso höher ist der Wirkungsgrad pro Impuls *mv*, da die Projektionen der Kreissegmente vom Punkt I bis Punkt III auf einer Gerade, die in der Bewegungsrichtung des gesamten Impuls-Schubantriebes liegt, massgebend sind. Zum Abstellen des Impuls-Schubantriebes, wird die Überbrückungskurve 12 wieder an die Kurve 11 angefahren. Dann kann auch der Motor abgestellt werden. An Neustart des Impuls-Schubanbiebes erfolgt wie oben ausgeführt.

### Beispiel 2

Die vorhandene Unwucht durch die bewegte Masse 8 wird fast ganz aufgehoben durch vier Impuls-Schubantriebe, deren Achsen 2 parallel zueinander liegen und deren Zentren auf den Ecken eines Qudrates liegen. Beim ersten der beiden Impuls-Schubantriebe sind die Punkte I bis III, die Strecken für die anelastischen und elastischen Stösse, zur Achse der Schubimpulserzeugung, innen liegend vorgesehen, wobei die Sehne des Kreisbogens von den Punkten I bis III parallel zur Achse der Schubimpulserzeugung liegt und der zweite Impuls-Schubantrieb spiegelbildlich zur obigen Achse angeordnet ist Beim dritten und vierten Impuls-Schubantrieb sind die Punkte I bis III jedoch aussen angeordnet. Alles andere ist aber gleich. Die vier Massen 8 sind, vor dem erstmaligen Starten des Impuls-Schaubantriebes, so angeordnet, dass sie mit ihren Schwerpunkten auf den Ecken des grössten oder des kleinsten Quadrates liegen, wobei die Seitenlinie der Quadrate parallel zur Achse der impulsschuberzeugungen, durch die Zentren der Achsen 2 geht und gleichzeitig die Mitnehmer 9 an den vier elastischen Kraftspeichern 10 anliegen, wobei die Massen 8 spiegelbildlich angeordnet sind. Der elastische Kraftspeicher 10 des linken Impuls-Schubantriebes ist im Gegenuhrzeigersinn und der des rechten Impuls-Schubantriebes, entgegengesetzt im Uluzeigersinn drehend vorgesehen. Der Drehsinn des dritten und des vierten elastischen Kraftspeicher 10 ist spiegelbildlich zum Drehsinn des ersten Paares der Impuls-Schubantriebe vorgesehen, wobei alle elastischen Kraftspeicher 10 synchron und ohne Schlupf drehend vorgesehen sind. Die seitlichen Unwuchten sind durch das erste Paar der Impuls-Schubantriebe vollständig kompensiert. Die noch vorhandene Unwucht, in beide Richtungen in der Achse der Schubimpulserzeugung, ist durch das zweite Paar Impuls-Schubantriebe in dieser Achse weitgehend kompensiert.

### Angabe zur Zeichnung Fig. 1

Schematische Zeichnung, teilweise aufgeschnitten und Angaben zu den Bedeutungen der Bezugszeichen und der Positionsangaben in der Zeichnung Fig. 1:
1. Grundplatte
2. Motorisch angetriebene Achse in der Grundplatte gelagert
3. Drehmasse mit grossem Drehimpuls hinter Grundplatte mit der Achse festverbunden
4. Bremse mit Grundplatte fest verbunden
5. Lager des Trägers mit ovalem Schnitt auf dieses
6. Bahn der Masse 8
7. Ausgewuchteter Träger der Masse
8. Masse
9. Aus- und einfahrbarer Mitnehmer der Masse
10. Mehrere elastische Kraftspeicher, mit ihren Tragkörpern mit der Achse 2 fest verbunden
11. Kurvenbahn für den Mitnehmer 9
12. Verschiebbare Überbrückungskurve, mit Aktuator betätigt
13. Auslauf aus der Vertiefung 15 auf das Niveau der Kurve 11
14. Einlauf von Kurve 11 in die Vertiefung 15
15. Vertiefung der Bahn 11
   Position 1, Einlauf in die Bremse und Beginn des anelastischen Stosses
   Position 11, Auslauf aus der Bremse und Beginn des elastischen Stosses
   Position 11l, Ende des elastischen Stosses und Erreichen der ursprünglichen Geschwindigkeit

## Patentansprüche

1. Impuls-Schubantrieb mit Schubimpulserzeugung, mittels einerseits, eines vorgesehenen ausfahrbaren anelastischen Stosses durch mindestens eine frei bewegliche Masse (8), die mit der Geschwindigkeit *v* auf der Strecke von mindestens einer Bahn (Punkt I-II), in ein mit dem Impuls-Schubantrieb festverbundenes, anelastisches, bremsendes Bauteil (4) einlaufend und die vorhandene Geschwindigkeit *v* der Masse vermindernd ist, und somit dem Impuls-Schubantrieb ein Impuls *mv* erteilt wird, und andrerseits mit einem nachfolgenden, motorisch ausführbarem elastischen Stoss, mittels einem elastischen Bauteil (10), auf dieselbe frei bewegliche Masse (8), auf der nachfolgenden Strecke von mindestens einer Bahn (Punkt II-III), dieser Masse (8) die ursprüngliche Geschwindigkeit verschafft wird, wobei das bremsende anelastische Bauteil als eine konventionelle reibende Bremse (4) ausgebildet ist, **dadurch gekennzeichet,**
dass durch den elastischen Stoss auf die frei bewegliche Masse (8) ein Impuls 2mv und dem motorischen Antrieb, der mit dem Impuls-Schubantrieb fest verbunden ist, ein Rückstoss, ein Impuls *2mv* erteilt wird, wobei vorgegeben ist, dass die anelastischen und die elastischen Stösse zwingend nur zusammen einen effektiven Schubimpuls erzeugen, die wiederholbar sind, und dass das durch ein motorisches Drehmoment (2,3) auf die frei bewegliche Masse (8) beschleunigend wirkende elastische Bauteil als elastischer Kraftspeicher (10), mit einer Speicherkraft *F* und langem Federweg s ausgebildet ist.

2. Impuls-Schubantrieb gemäss Anspruch 1, **dadurch gekennzeichnet, dass** der Impuls-Schubantrieb, (Fig. 1) eine Grundplatte (1) aufweist, dass auf der Rückseite dieser Grundplatte ein Motor angeordnet ist, wobei die motorisch angetriebene Achse (2) durch die Grundplatte hindurch reichend ist, und dass auf dieser Achse eine mit ihr fest verbundene Drehmasse (3) montiert ist, und dass weiters ein auf der Achse (2) frei drehbar gelagerter (5) und ausgewuchteter Träger (7) für die Masse (8) angeordnet ist, die einen mit Federkraft ein- und ausfahrbaren Mitnehmer (9) aufweist, und dass als elastisches Teil ein mehrteiliger elastischer Kraftspeicher (10) vorgesehen ist, der mit der Achse (2) ebenfalls fast verbunden ist, wobei vorgesehen ist, dass ein Mitnehmer (9) auf der vorhandenen Kurvenbahn (11) auf der Vorderseite der Grundplatte (1) aufliegt, wobei diese Bahn (6), die mit der Kurvenbahn (11) zusammenfällt, sofern der Schwerpunkt der Masse (8) sich in der Achse des Mitnehmers (9) befindet, mit dem Mitnehmer (9) der Masse (8) mit ihrer Geschwindigkeit rollend oder gleitend überfahrbar ist, wobei die Bahn (11) einen Einlauf (14) in die Vertiefung der Bahn (11) und einen Auslauf (13) aus der Vertiefung der Bahn (11) aufweist, wobei vorgesehen ist, dass mit der Überbrückungskurve (12), die mittels konventionellem Aktuator radial verschieblich ist, an die Vertiefung der Kurve (11), die Vertiefung und die Schrägen (14), (13) anfahrbar ist, so dass für den Mitnehmer (9), die Kurvenbahn (11) in einer Ebene überbrückbar ist und der Mitnehmer (9) dabei ausgefahren ist, wodurch dieser durch den elastischen Kraftspeicher (10) mitnehmbar ist, und vorgesehen ist, diesem und somit der Masse (8) an ihrem Mitnehmern (9) nach einigen Umdrehungen nach dem Starten des Impuls-Schubantriebes und seines Motors, dem elastischen Kraftspeicher die Betriebs-Winkelgeschwindigkeit und der Masse (8) die maximale Geschwindigkeit *v* zu erteilen, so dass ein anelastischer Stoss ausfahrbar ist, indem vorgesehen ist, dass zuvor die Überbrückungskurve (12) radial von der Kurvenbahn (11) wegfahrbar ist, und dass der Mitnehmer (9) kurz in die Vertiefung mittels der Schräge (14) der Kurvenbahn (11) einfahrbar ist, wobei praktisch gleichzeitig das Segment der Bremse (4) in die Bremse (I) einfahrbar ist, wobei im Weiteren vorgesehen ist, dass praktisch gleichzeitig der Mitnehmer (9) den Kontakt mit dem bis anhin anliegendem Kraftspeicher (10) verliert, so dass für den Kraftspeicher (10) die Geschwindigkeit unvermindert beibehaltbar ist und gleichzeitig die Geschwindigkeit der Masse (8) in der Bremse (4) verzögerbar verringerbar ist, sowie gleichzeitig in der gleichen kurzen Zeitspanne der Mitnehmer (9) auf der Schräge (13) der Mitnehmer (9) wieder ausfahrbar ist, so dass der nächstfolgende Kraftspeicher (10), durch den Mitnehmer (9) und somit die Masse (8), am Ende der Bremse (4) (II) mit dem elastischen Kraftspeicher (10) übernehmbar ist, so dass auf der Beschleunigungsstrecke (Punkt II-III) des elastischen Stosses (10), die ursprüngliche Geschwindigkeit der Masse (8) erreichbar ist.

3. Impuls-Schubantrieb, gemäss den Ansprüchen 1 und 2, **dadurch gekennzeichnet, dass** vorgesehen ist, dass die seitlich vorhandene Unwucht durch die bewegte Masse (8) des Impuls-Schubantriebes, der auf einer Geraden positioniert ist, die parallel zur Achse der Impulsschuberzeugungen liegt und durch das Zentrum der Achse (2) geht, wobei der Mitnehmer (9) der Masse (8) am elastischen Kraftspeicher (10) anliegend vorgesehen ist, sowie der Mitnehmer (9), der auf der Geraden liegend angeordnet ist, durch einen zweiten Impuls-Schubantrieb, der spiegelbildlich zum ersten angeordnet ist, die seitlich wirkenden Unwuchten der Massen (8) zur Richtung der Achse der Impulserzeugungen, durch die anelastischen und der elastischen Stösse (Punkt I-III) kompensierbar sind, durch entgegengesetzt und synchron drehende elastische Kraftspeicher (10) mit ihren Massen (8), wobei deren Geraden die durch den Anfang der Strecken (Punkt I) der Bremsen (4) und den Enden der Strecken (Punkt III) der Beschleunigungen (10) verlaufend sind, wobei vorgesehen ist, dass die Strecken für die anelastischen und elastischen Stösse zur Achse der Impulserzeugungen, parallel und innen liegend angeordnet sind, sowie die Anordnungen der Massen (8) vor dem Start der Impuls-Schubantriebe, spiegelbildlich vorgesehen sind.

4. Impuls-Schubantrieb, gemäss den Ansprüchen 1, 2 und 3, **dadurch gekennzeichnet, dass** zwei Paar Impuls-Schubantriebe vorgesehen sind, so dass die verbleibende Unwucht in der Bewegungsrichtung der Achse der Schuberzeugungen weitgehend kompensierbar ist durch vier Impuls-Schubantriebe, die spiegelbildlich links und rechts von der Achse der Schubimpulserzeugung angeordnet sind, wobei die Zentren der Achsen (2) auf den Ecken eines Quadrates liegend und die Massen (8) am elastischen Kraftspeicher (10) anliegend vorgesehen sind, sowie deren Mitnehmer (9) der Massen (8) auf den Geraden, die durch die Zentren der Achsen (2) verlaufend und spiegelbildlich angeordnet sind, wobei wie vorgesehen die Strecken der anelastischen und elastischen Stösse (Punkt I-III), für die ersten beiden Impuls-Schubantriebe innen liegend, parallel und spiegelbildlich zu der Achse der Impulserzeugungen, angeordnet sind und die Strecken der anelastischen und elastischen Stösse (Punkt I-III) des zweiten Paares Impuls-Schubantriebe aussen liegend, parallel und spiegelbildlich zu der Achse der Impulserzeugungen, angeordnet sind, sowie die Massen (8) und Mitnehmer (9) spiegelbildlich zu den Massen (8) und die Mitnehmer (9) des ersten Paares Impuls-Schubantriebe, angeordnet sind, und dabei alle vier Mitnehmer (9) der Massen (8) vor dem Start der Impuls-Schub-antriebe, am elastischen Kraftspeicher (10) anliegend vorgesehen sind, wobei der Drehsinn der elastischen Kraftspeicher (10) spiegelbildlich und synchron zum Drehsinn des ersten Paares Impuls-Schubantriebe vorgesehen ist.

5. Impuls-Schubantrieb, gemäss den Ansprüchen 1, 2, 3 und 4, **dadurch gekennzeichnet, dass** anstelle der mit Verschleiss behafteten, reibenden Bremsen (4) verschleissfreie Wirbelstrombremsen eingesetzt sind.

## Claims

1. Pulse push drive with push pulse generation, on one hand by means of a non elastic impact, which is generated by at least on versatile mass (8) which enters with a speed v on the path of at least one track (point I - II) into a braking non elastic component (4) which is connected to the pulse push drive and reducing the existing speed v of the mass and hence a pulse mv is transferred to the pulse push drive, and on the other hand the original speed is transferred to the said mass (8) by means of a subsequent elastic impact, which is realized by means of a motor, and by means of a non elastic component (10) to the versatile mass (8) on the subsequent path of at least one track (point II - III), whereby the non elastic braking component is realized a conventional frictional brake (4), characteristic in that an impact 2mv is transferred by the elastic impact to the versatile mass (8) and to the motor drive, which ist connected permanently to the pulse push drive, is transferred a back stroke 2mv, whereby it is specified, that the non elastic and the elastic impacts generate, in an obligatory manner, only together an effective push pulse, which impact can be repeated, and that the elastic component, which acts by means of a motor driven torque in an accelerating manner on the versatile mass (8), is realized as an elastic force accumulator (10) with an accumulator force and a long spring stroke s.

2. Pulse push drive according to claim 1, **characterized in that** the pulse push drive comprises a base plate (1), on the rear side of this base plate being arranged a motor, whereby the motor drive shaft (2) traverses the base plate, and that on this shaft is mounted a rotational mass (3) which is connected permanently to the said plate and that in addition a support for the mass (8) is arranged on the shaft, which mass comprises an introducible and extractable dog (9) which can be entered into and moved out by means of a spring force, and that a multi-part elastic force accumulator (10) is provided as an elastic part, which accumulator is also connected permanently to the shaft (2), whereby it is specified, that a dog (9) is applied on the existing curve track (11) on the front side of the base plate (1), whereby this track (6), which coincides with the curve track (11), if the center of gravity of the mass (8) is situated in the shaft of the dog (9), can be crossed by means of the dog (9) of the mass (8) with its speed in rolling and sliding manner, whereby the track (11) comprises an inlet (14) into the recess of the track (11) and an outlet (13) out of the recess of the track (11), whereby it is specified, that it is possible to approach the recess and the bevel (14), (13) to the recess of the curve (11) by means of the shunting curve (12), which can be radially moved by means of a conventional actuator, so that the curve track (11) can be shunted for the dog (9) in one plane, and that the dog (9) can be extracted at the same time, whereby this dog can be entrained by the elastic force accumulator (10) and it is specified, to transfer the operative angular speed to the force accumulator after some revolutions after the start of the pulse push drive and its motor, and to transfer to the mass (8) the maximum speed v, so that a non elastic impact can be realized, whereby it is specified that it is previously possible to depart the shunt curve (12) radialy from the curve track (11), and that the dog (9) can be shortly entered into the recess by means of a bevel (14) of the curve track (11), whereby it is possible, to enter in practice at the same time the segment of the brake (4) into the brake (1), whereby it is intended that the dog looses in practice at the same time the contact with the force accumulator , which was till then in contact, so that it is possible to maintain the speed of the force accumulator (10) and the speed of the mass (8) in the brake can be reduced at the same time, and it is possible at the same time to move out in the same short time interval the dog (9) on the bevel (13) of the dogs, so that it is possible to receive at the end of the brake (4) (II) the next force accumulator (10) by means of the dog (9) and so the mass (8), so that the original speed of the mass (8) can be achieved on the acceleration path (point II-III) of the elastic impact (10).

3. Pulse push drive according to the claims 1 and 2, **characterized in that** it is specified that the laterally existing unbalance can be compensated by means of the mobile mass (8) of the pulse push drive which is arranged on the straight line which is parallel to the axis of the push pulse generation and extends through the center of the shaft (2), whereby the dog (9) of the mass (8) is provided applied to the elastic force accumulator (10), and the dog (9) is arranged on the straight line , and the laterally arranged unbalances of the masses (8) which extend in the direction of the axes of the pulse generations by means of non elastic and elastic impacts (point I-III) can also be compensated by means of a second push pulse drive, which is arranged inversely to the first push pulse drive, by elastic force accumulators (10) with their masses which rotate inversely and in an synchronized manner, whereby the straight lines of the impacts extend through the beginning of the paths (point I) of the brakes (4) and the ends of the paths (point III) of the accelerations, whereby it is intended that the paths are arranged for the non elastic and elastic impacts parallel and interior to the axis of the pulse generations, and whereby the arrangements of the masses (8) are inversely provided before the start of the push pulse drives.

4. Pulse push drive according to the claims 1, 2 and 3, **characterized in that** two pairs of pulse push drives are provided, so that the residual unbalance can be compensated in the direction of the movement of the shaft of the push generations substantially by means of four pulse push drives which are arranged inversely on the left and on the right of the axis of the push pulse generations, whereby the centers of the shafts (2) are arranged on the corners of a square and the masses (8) are arranged on the elastic force accumulator (19), and the dog (9) of the masses (8) are arranged on the straight lines, which extend through the centers of the shafts (2) and which straight lines are inversely arranged., whereby the paths of the non elastic and elastic impacts (point I-III) are arranged for the first two pulse push drives at the interior of the axis and parallel and inversely to the said axis of pulse generation, and the paths of the non elastic and elastic impacts (point I-III) are arranged for the second two pulse push drives at the interior of the axis and parallel and inversely to the said axis of pulse generation, and the masses (8) and the dogs (9) are inversely arranges to the masses (8) and dogs (9) of the first pair of pulse push drives, and thereby all the four dogs (9) of the masses (8) are intended to be arranged an the force accumulator (10) before the start of the pulse push drives, whereby the direction of rotation of the pulse push drive (10) ist intended to be arranged in an inverse and synchronous manner to the direction of rotation of the first pair of pulse push drives.

5. Pulse push drive according to the claims 1, 2, 3 and 4, **characterized in that** instead of the frictional and not wear resisting brakes (4) wear resisting eddy current brakes are employed.

## Revendications

1. Entraînement poussoir à impulsions doté d'une génération d'impulsions poussoirs, réalisée au moyen d'une part d'un choc non élastique susceptible d'être sorti, prévu grâce à au moins une masse (8) librement mobile, laquelle masse rentre sur le chemin composé d'au moins un trajet (point I-II) avec une vitesse v dans l'élément (4) qui freine et qui est non élastique et connecté fermement à l'entraînement poussoir à impulsions, et réduit la vitesse v existante de la masse, et où donc est appliqué un choc mv à l'entraînement poussoir à impulsions, et d'autre part on réalise, grâce à un choc élastique qui suit et qui est réalisé au moyen d'un moteur, la vitesse d'origine à ladite masse (8) librement mobile sur le chemin suivant composé d'un moins un trajet (point II-III), où l'élément freinant non élastique est réalisé sous la forme d'un frein (4) à friction conventionnel, **caractérisé en ce qu'**une impulsion 2mv est appliquée à la masse librement mobile (8) grâce au choc élastique et une répulsion, d'est à dire une impulsion 2mv, est appliqué à l'entraînement motorisé qui est fermement connecté à l'entraînement poussoir à impulsions, dans lequel cas est spécifié, que les chocs non élastiques et le chocs élastiques génèrent forcément uniquement ensemble une impulsion poussoir effective, lesquels chocs peuvent être répétés, et **en ce que** l'élément élastique agissant de façon accélératrice sur la masse (8) librement mobile est réalisé sous la forme d'un accumulateur de force (10) élastique avec une force accumulatrice F et un trajet de ressort s long.

2. Entraînement poussoir à impulsions selon la revendication 1, **caractérisé en ce que** l' entraînement poussoir à impulsions (Fig. 1) comporte une plaque de base (1), **en ce qu'**un moteur est disposé sur le côté arrière de la plaque de base, dans lequel cas l'arbre (2) entraîne par un moteur traverse la plaque de base et **en ce qu'**une masse de rotation (3) est monté sur ledit arbre et est liée de façon fixe audit arbre, et **en ce qu'**un support équilibré pour ladite masse (8) est disposé en outre d'une manière à tourner librement sur ledit arbre, laquelle masse comporte un dispositif d'entraînement (9) qui peut être rentré et sorti grâce à une force de ressort, et **en ce que** l'on a prévu comme pièce élastique un accumulateur de force (10) élastique composé de plusieurs pièces, lequel accumulateur est également fixé de façon fixe avec l'arbre (2), dans lequel cas est prévu qu'un dispositif d'entraînement (9) est appliqué sur la piste (11), sous forme de courbe, existant, sur le côté avant de la plaque de base (1) ou la piste (6), qui coïncide avec la piste en forme de courbe (11) peut être traversée de façon roulante ou glissante avec le dispositif d'entraînement (9) de la masse (8) avec la vitesse da ladite masse, si le centre de gravité de masse (8) est situé dans l'axe du dispositif d'entraînement (9), dans lequel cas la piste (11) comporte une entrée (14) vers l'enfoncement de la piste (11) et une sortie (13) hors de l'enfoncement de la piste (11), dans lequel cas on a prévu de pouvoir approché l'enfoncement de la piste respectivement courbe (11) l'enfoncement (14) et la pente (13) au moyen de la courbe de pontage (12), da manière à ce que l'on peut ponter pour le dispositif d'entraînement (9) la piste en forme de courbe (11) dans un plan et le dispositif d'entraînement (9) est sorti en même temps, ayant pour conséquence que ledit dispositif d'entraînement (9) peut être entraîné par l'accumulateur de force (10) élastique et on a prévu d'appliquer audit dispositif d'entraînement et donc à la masse (8à sur ledit dispositif d'entraînement après quelques tours a partir du démarrage de l'entraînement poussoir à impulsions et de son moteur, et à l'accumulateur de force élastique, la vitesse angulaire de service et ç la masse (8) la vitesse maximale v, de manière à ce qu'un choc non élastique peut être sorti en prévoyant que l'on peut sortir tout d'abord la courbe (12) de pontage de façon radiale de la piste (11) en forme de courbe, et **en ce que** l'on peut rentrer le dispositif d'entraînement (9) de façon brève dans l'enfoncement au moyen la, pente (14) de la piste (11) en forme de courbe, dans lequel cas on peut rentrer dans le frein pratiquement en même temps le segment du frein (4), où on a prévu en outre que le dispositif d'entraînement (9) perd pratiquement en même temps le contact avec l'accumulateur de force (10) appliqué jusque la; de manière à ce que l'on peut maintenir la vitesse avec la même intensité pour l'accumulateur de force (10) et on peut réduire instantanément en même temps la vitesse de la masse (8) dans le frein (4), et on peut sortir en même temps, dans le même intervalle de temps court, le dispositif d'entraînement (9) sur la pente des dispositif d'entraînement (9) de manière à ce que l'accumulateur de force (10) peut être reçu par le dispositif d'entraînement (9) et donc la masse (9) à l'extrémité du frein (4) (II), avec l'accumulateur de force (10) élastique, de manière à ce que l'on peut atteindre sur le trajet d'accélération (point II - III) du choc élastique (10) la vitesse d'origine de la masse (8).

3. Entraînement poussoir à impulsions selon la revendication 1 et 2, **caractérisé en ce que** l'on a prévu de compenser le balourd existant de faon latérale par la masse (8) mobile de l'entraînement poussoir à impulsions qui est positionné sur une droite qui s'étend de façon parallèle par rapport à l'axe de la génération de l'impulsion poussoir et qui traverse le centre de l'axe (2), où le dispositif d'entraînement (9) de la masse (8) est prévu sur l'accumulateur de force (10) élastique, ainsi que le dispositif d'entraînement (9), qui est disposé sur la droite, grâce à un deuxième entraînement poussoir à impulsions qui est disposé de façon renversée par rapport au premier entraînement poussoir à impulsions, les balourds des masses, agissant latéralement, par rapport à la direction de l'axe des chocs générant les impulsions, les chocs non élastiques et élastiques (point I - III), par des accumulateurs de force (10) élastiques avec leurs masses (8), tournant en sens inverse et de façon synchrone, où leurs droites s'étendent par le début des trajets (point I) des freins (4) et les extrémités des trajets (point III) des accumulateurs (10), où on a prévu que les trajets pour les chocs non élastiques et élastiques sont disposés de façon parallèle à l'intérieur par rapport à l'axe des générations des impulsions, où on a prévu les dispositions des masses (8) avant le démarrage des entraînements poussoirs à impulsions de façon renversée.

4. Entraînement poussoir à impulsions selon les revendications 1, 2 et 3, **caractérisé en ce que** deux paires d'entraînement poussoir à impulsions sont prévus, de manière à ce que le balourd restant peut être compensé en grande partie dans la direction de mouvement de l'axe de la génération de poussée par quatre entraînements poussoirs à impulsions qui sont disposés de façon renversée à gauche et à droite de l'axe de la génération de l'impulsion poussoir ; où les centres des axes (2) sont prévus sur les coins d'un carré et les masses (8) sont prévues sur l"accumulateur de force (10) élastique, ainsi leurs dispositifs d'entraînement (9) des masses (8) sont disposés sur leurs droites, qui s'étendent par les centres des axes (2) et de façon renversée, où; comme il a été prévu, les trajets de chocs non élastiques et élastiques (point I - III) sont disposées pour les premiers deux entraînements poussoirs à impulsions situés à l'intérieur, de façon parallèle et renversée par rapport à l'axe de la génération des impulsions et les trajets de chocs non élastiques et élastiques (point I - III) sont disposées pour le deuxième paire d'entraînement poussoir à impulsions situé à l'intérieur, de façon parallèle et renversée par rapport à l'axe de la génération des impulsions, ainsi que les masses (8) et les dispositifs d'entraînement (9) sont disposés de façon renversée par rapport aux masses (8) et dispositifs d'entraînement (9) du premier paire de l'entraînement poussoir à impulsions, et dans ces cas les quatre dispositifs d'entraînement (9) des masses (8) sont prévus avant le démarrage des entraînements poussoirs à impulsions sur l'accumulateur de force élastique (10) où le sens de la rotation des accumulateur de force (10) est prévu de façon renversée et synchrone par rapport au sens de rotation du premier paire de l'entraînement poussoir à impulsions.

5. Entraînement poussoir à impulsions selon les revendications 1, 2, 3 et 4, **caractérisé en ce que** l'on emploie à la place des freins à friction (4) soumis à l'usure, des freins à induction, résistant à l'usure.
